# EUROPEAN PATENT APPLICATION

(11) **EP 3 660 767 A1**
(43) Date of publication of application: **03.06.2020**
(21) Application number: 18208996.1
(22) Date of filing: 28.11.2018
(51) Int. Cl.: G06Q 20/08, G06Q 20/38

(54) **IMPROVEMENTS RELATING TO SECURITY AND AUTHENTICATION OF INTERACTION DATA**

(71) Applicant: Mastercard International Incorporated, Purchase NY 10577 (US)
(72) Inventor: WOUTERS, Valerie, 1332 Genval (BE); PHILLIPS, Simon, York, YO30 6LN (GB); CHEUNG, Timothy, Carshalton, SM5 4AE (GB); JOHNSON, Alan, Maldon, Essex CM9 8HW (GB)
(74) Representative: Lawrence, Richard Anthony

(57) **Abstract**

There is provided an intermediary server system for providing data for use in authenticating an interaction between the mobile device and a gateway. This server system comprises: an input configured to receive, from the mobile device, interaction data comprising a plurality of interaction data items associated with the interaction and a security identifier uniquely identifying the interaction. The server system further comprises a processor configured with instructions that when executed cause the processor to: generate a request for reference data to be associated with the security identifier, the request comprising at least one of the plurality of interaction data items and the security identifier; transmit, to a remote authentication server, the generated request; receive, from the remote authentication server, the dynamic reference data; and alter the received interaction data by replacing at least one of the plurality of interaction data items with the dynamic reference data. The server system further comprises an output configured to transmit, to the gateway, the altered interaction data.

## Description

### TECHNICAL FIELD

The present disclosure relates to a system for authenticating and validating interactions between network entities using cryptographic methods.

### BACKGROUND

Payment transactions are increasingly being carried out electronically, whereby users purchase goods and services online by entering their payment card details and authentication information at the merchant's online payment gateway. This data is then provided to the issuer of the payment card to authenticate the user and their purchase, and to ensure that the transaction data provided is valid and legitimate.

Systems which facilitate such electronic transactions for merchants are generally referred to as e-commerce payment systems, and the majority of their transactions are carried out using credit cards or debit cards issued, in conjunction with the user's banks, by card issuing entities such as Mastercard. Such entities have stringent security rules, relating to the use of their credit or debit cards, that merchants must comply with to be able to accept online payment transactions which use those cards.

It can be very time-consuming during the purchase checkout process for the user to enter all of the relevant payment and authentication data in the forms, so as to enable cross-checking and verification against stored customer data. The present applicant has developed a proprietary mobile wallet system, known as MasterPass™, which provides a digital wallet service to increase the speed of checkout without compromising the security of the transaction process. This digital wallet service stores customer details (for example, identification and address details) as well as details of one or more of the user's payment cards that will be used in e-commerce transactions. A security measure (such as a PIN or password) is also set up to request user authentication for use of the digital wallet functions. When the user initiates a purchase online for those merchant systems that are compatible with the digital wallet service, all the user need do is select the digital wallet option and sign in to the digital wallet application; the necessary details will automatically be transferred to the merchant and commerce payment system from the digital wallet application.

To ensure their security and authenticity, such digital wallet-enabled payments still must be verified by the card issuer.

Often, the verification mechanisms implemented by the card issuers utilise transaction data provided to the merchant by the user. The transaction data is forwarded to the card issuer by the merchant and used to authenticate the transaction. For a given payment card, this transaction data is usually static and is generated based on information collected during the transaction - namely, the Primary Account Number (PAN), the expiry date of the payment card, and a Card Verification Code (also referred to as a CVC2), which is a three-digit number provided on the back of a Mastercard payment card, and generated by encrypting bank card details and decimalising the result. For mobile wallet-based solutions, this data can be tokenized (i.e. replaced by a digital surrogate or 'token' payment credential) but the data is nevertheless essentially static within an ecommerce transaction, and therefore it can be relatively easily forged or replicated. This causes difficulties for the card issuer when authenticating any given transaction, as the data is not cryptographically unique per transaction and can lead to declined valid transactions or a need for extra measures to prevent approval of fraudulent transactions.

One solution to the problems associated with purely static transaction data is the use of dynamic card verification codes, where the payment card itself generates a new, unpredictable, CVC2 for each transaction that is carried out. However, such dynamic codes are still effectively tied to the card that generates them and therefore a thief who is able to steal the card will still be able to carry out apparently 'valid' transactions using the stolen card, thus requiring additional fraud prevention measures to be taken elsewhere.

It can, however, be difficult to effect change in transaction processing networks, due to the complex processing pathways that exist between multiple different entities, many of which (in particular the merchants) may be slow to upgrade their systems and technology to keep up with advances in payment transaction security technology.

Against this background, the present disclosure aims to provide a system and method of carrying out e-commerce payment transactions securely and efficiently, whilst utilising the existing transaction infrastructure and authentication methods that are currently implemented by e-commerce merchants. In particular, the present disclosure aims to provide methods of validating e-commerce transactions carried out via an online payment gateway, as well as methods for generating and validating transaction data.

### SUMMARY OF THE INVENTION

According to an aspect of the present disclosure, there is provided an intermediary server system for providing data for use in authenticating an interaction between the mobile device and a gateway. This server system comprises an input configured to receive, from the mobile device, interaction data comprising a plurality of interaction data items associated with the interaction and a security identifier uniquely identifying the interaction. The server system further comprises a processor configured with instructions that when executed cause the processor to: generate a request for reference data to be associated with the security identifier, the request comprising at least one of the plurality of interaction data items and the security identifier; transmit, to a remote authentication server, the generated request; receive, from the remote authentication server, the dynamic reference data; and alter the received interaction data by replacing at least one of the plurality of interaction data items with the dynamic reference data. The intermediary server system further comprises an output configured to transmit, to the gateway, the altered interaction data.

The above-described configuration advantageously provides the ability to generate and insert dynamic data into the data items or electronic data packets that are generated as a matter of course for a particular interaction, and which are already being sent to a remote system for authentication purposes. The level of security of interactions is increased through the use of dynamic data, making it much more difficult for a fraudulent interaction to be carried out. Simultaneously, the above-described configuration also advantageously exploits existing data processing and transmission pathways that are currently in place. This increases the ease with which the use of dynamic data may be implemented, and avoids any delays in uptake which might arise due to a need to change or upgrade the associated physical network infrastructure and connections.

In addition, because only reference data associated with the security identifier is transmitted (rather than the security identifier itself); the amount of dynamic data that actually needs to be concealed within the transmitted data packets is relatively small. Furthermore, when the interaction data is subsequently transmitted from the gateway to the remote authentication server, the security of the interaction is maintained because it is only the reference data that is ultimately transmitted in the altered interaction data rather than the security identifier (which remains securely stored by the remote authentication server). Therefore, a third party intercepting the transmitted interaction data would not be able to obtain the security identifier for fraudulent purposes.

Provision of an intermediary server system that handles the incorporation of dynamic data into the interaction data is advantageous as it is relatively easy for this server system to be programmed with the functionality to request the dynamic data that will be required for authentication and to alter the standard interaction data to incorporate the necessary dynamic data. Furthermore, if the remote authentication server is associated with the intermediary server system, this functionality can be seamlessly provided to the server system, with relatively little or no impact on the mobile device and gateway.

The use of an intermediary server system is particularly useful in situations where the remote authentication system is not directly associated with either the mobile device or the gateway, and particularly for cases where the remote authentication system is required to authenticate interactions that are carried out between multiple different mobile device-gateway pairs. For example, in the case where the interactions correspond to transactions that are carried out between cardholders and merchant online gateways, as the payment card used in the transaction is not physically present during the transactions, this makes verification of the transactions much more difficult for the remote authentication system.

In the context of transaction processing, in one example, the intermediary server system may correspond to a 'switch' entity which is in communication with the remote authentication server and acts as an intermediary for transmission of transaction data between the mobile device and the (merchant's online payment) gateway. Alternatively, the intermediary server system may correspond to a digital wallet server that is associated specifically with a digital wallet in the mobile device that is involved in carrying out the transaction processing. The digital wallet server will still be capable of communication with the remote authentication server to exchange data and obtain the necessary reference dynamic data.

In some embodiments, the security identifier may be generated (by the mobile device) based on the interaction data.
Optionally, the processor of the intermediary server system is further configured to transmit, to the remote authentication server, an indication that dynamic validation data should be provided by the remote authentication server, and to receive the dynamic validation data from the remote authentication server. Not all gateways involved in these interactions will necessarily be able to process or handle an additional piece of dynamic data (for example, some gateways may not be configured to process the specific piece of interaction data that is to be replaced by the dynamic validation data). In order to ensure that this additional piece of validation data is only generated when it will be of use, transmitting an indication in the above-described manner is useful. In addition, the indication may be used as a further authentication mechanism subsequently by the remote authentication server: if the authentication server generates and stores the dynamic validation data, but the interaction data subsequently received from the merchant does not contain the corresponding data, the authentication server will determine that the interaction was fraudulent.

In some embodiments, the processor is configured to alter the received interaction data by replacing at least one of the plurality of interaction data items with the dynamic validation data. In this instance, two pieces of dynamic data would then be transmitted by the intermediary server system to the gateway, and subsequently to the remote authentication server - namely, a piece of reference data that may be used to retrieve the associated security identifier together with its stored associated interaction data; and a piece of validation data that may be compared with one of these stored pieces of interaction data so as to provide additional confirmation that the interaction data transmitted by the gateway to the remote authentication server is genuine and valid.

The dynamic reference data may be randomly-generated. This is advantageous as it increases the number of possible values that the dynamic reference data may take, and therefore decreases the probability of a third party being able to generate the appropriate data for fraudulent use.

In some embodiments, the interaction comprises an online payment transaction and the gateway corresponds to an online payment gateway associated with a merchant. In the context of a payment transaction, the plurality of interaction data items associated with the interaction may correspond to a PAN, expiry date and CVC2; the former two values are always transmitted between the mobile device and the gateway, and between the gateway and the remote server. Altering this data such that it serves as a vehicle for dynamic authentication-related data therefore guarantees that the dynamic data will always be transmitted to the remote authentication server, but at no extra effort for either the mobile device user (i.e. the cardholder) or the gateway operator (i.e. the merchant).

In such embodiments, the plurality of interaction data items may optionally correspond to transaction data, and the security identifier may correspond to a dynamic transaction cryptogram. Use of a dynamic transaction cryptogram is advantageous as it provides enhanced security for transactions that are carried out remotely from the user's payment card. However, it may be difficult for many merchants and their associated payment gateways to transmit and process the transaction cryptograms without significant alterations to their systems. The use of the intermediary server system in the context of such transactions is particularly advantageous, as it maintains the security of the transaction whilst also enabling the transactions to occur using existing network infrastructure.

In some cases, the interaction data item replaced during the alteration corresponds to an expiry date of a payment card used in the online payment transaction. It should be noted that the expiry date of the payment card used in the transaction is usually transmitted during the transaction, but is not always checked particularly rigorously by the merchant during the transaction. There is therefore potentially greater leeway to alter the expiry date than many of the other pieces of transaction data. The actual expiry date can therefore be replaced with a plausible value that comprises the generated dynamic reference data, and thereby ensures a guaranteed vehicle for transmission of the dynamic data via existing network infrastructure and processing pathways. Backwards compatibility is therefore enabled.

In embodiments where dynamic validation data is also incorporated into the interaction data, the interaction data item replaced by the dynamic validation data corresponds to a verification code (i.e. the CVC2) of the payment card used in the payment transaction. It should be noted that the verification code of the payment card can be transmitted by many merchants, and is therefore another useful vehicle for the transmission of dynamic data for subsequent transaction authentication purposes. However, not all merchants are necessarily capable of providing this functionality (and in particular, of accepting the CVC2 value when it is provided to them by a digital wallet application for an online payment transaction). However, for those merchants who do support this functionality, the addition of another piece of dynamic validation data provides an added layer of security to the transaction process.

In some embodiments, the one or more interaction data items transmitted in the request for dynamic reference data from the intermediary server system to the remote authentication server comprise at least: data identifying the payment card used in the transaction (e.g. a token or PAN), an expiry date of the payment card, and an indication of whether a verification code (i.e. a CVC2) of the payment card will be transmitted subsequently to the remote authentication server by the gateway.

As was mentioned previously, the majority of these pieces of data (particularly the expiry date of the payment card, and the CVC2 data) are almost always transmitted between the various entities during the transaction, and therefore it is useful for subsequent authentication purposes to transmit these pieces of information as part of the request for reference dynamic data. Specifically, these pieces of transaction data are stored in association with the dynamic reference data and the transaction cryptogram and are used in a cross-check with received transaction data during the authentication of the transaction cryptogram.

According to another aspect of the present disclosure, there is provided a server for generating data for authentication of an interaction carried out between a mobile device and a gateway. The server comprises a processor configured with instructions that when executed cause the processor to: receive, from an intermediary server system associated with the mobile device and gateway, a request for dynamic reference data, the request comprising a plurality of interaction data items associated with the interaction, and a security identifier uniquely identifying the interaction; generate, in response to the request, dynamic reference data associated with the security identifier; store, at a storage location, the generated dynamic reference data together with the received security identifier; and transmit, to the intermediary server system, the dynamic reference data.

The above-described configuration utilises the presence of small pieces of data within interaction-related data packets, which would be transmitted between the gateway and a remote authentication system as a matter of course whenever an interaction takes place, to conceal and transmit dynamic data which may aid the remote authentication system during subsequent authentication of the interaction. The use of existing pathways to transmit the dynamic data, with all of the authentication functionality being provided by the remote server, increases the ease of uptake of the above-described method in existing network infrastructure. In addition, using this method, because only reference data associated with the security identifier is transmitted, the amount of dynamic data that actually needs to be concealed within the transmitted data packets is relatively small. Furthermore, as mentioned previously, when the interaction data is subsequently transmitted to the gateway from the intermediary server system, and from the gateway to the remote authentication server, the security of the interaction is maintained because it is only the reference data that is ultimately transmitted.

The intermediary server system may then subsequently utilise the dynamic reference data to alter the interaction data that was initially received by it from the mobile device, and to transmit the altered interaction data to the gateway for processing and onward transmission.

Optionally, in some embodiments, the processor of the server may be further configured to store one or more of the plurality of interaction data items together with the security identifier and the dynamic reference data.

The interaction data items may be stored in a database by the server together with the security identifier and the reference dynamic data, such that the combination of data items may be used to authenticate the interaction at a subsequent date (if the server is configured to carry out this authentication functionality). A match between stored and received data involving multiple variables will have a much lower likelihood of producing a false positive result than a match involving only a single variable.

In some embodiments, the processor of the server may be further configured to associate a maximum storage validity period with the security identifier. Advantageously, associating a maximum storage validity period with the security identifier ensures that the security identifier only remains valid for a short period of time - this period of time is sufficiently long so as to enable the interaction data to be subsequently received and authenticated, but sufficiently short so as to prevent a third party from intercepting the transmissions and utilising the security identifier at a later date to authenticate additional fraudulent interactions.

In some cases, the maximum storage validity period may be defined by the mobile device and may therefore be received by the server or other authentication system as part of the request for reference dynamic data. Alternatively or additionally, and particularly if the validity period defined by the mobile device is considered to be too long by the server or subsequent authentication system (i.e. to exceed a pre-determined default value), the server or subsequent authentication system may simply define a default value for the maximum storage validity period and associate that value with the security identifier during storage.

In some embodiments, the processor of the server may be further configured to generate dynamic validation data, and to store the dynamic validation data in association with the security identifier. In such embodiments, the processor of the server may be further configured to transmit the dynamic validation data to the intermediary server system for subsequent provision to the gateway.

In such cases, dynamic validation data is also generated in addition to the dynamic reference data. It should be noted that the dynamic validation data is not directly associated with the security identifier in the same manner as the dynamic reference data, and therefore is not used as a cross-check of the security identifier per se. Instead, the dynamic validation data is intended to be compared with a piece of interaction data that has been stored by the server or a subsequent authentication system, in order to provide further confirmation that the interaction data received by the server or subsequent authentication system is authentic.

According to a further aspect of the present disclosure, there is provided an authentication server for authenticating an interaction carried out between a mobile device and a gateway. The authentication server comprises a processor configured with instructions that when executed cause the processor to: receive, from the gateway, interaction data comprising a plurality of altered interaction data items associated with the interaction, and dynamic reference data associated with a security identifier uniquely identifying the interaction; retrieve, from a storage location, the security identifier corresponding to the received dynamic reference data; and verify the validity of the security identifier.

In some embodiments, the authentication server is subsequently configured to insert the verified security identifier into the interaction data for subsequent authentication of the interaction. The authentication server may further be configured to carry out this subsequent interaction authentication.

According to a further aspect of the present disclosure, there is provided a gateway arranged to process an interaction carried out with a mobile device, the mobile device configured to generate interaction data comprising a plurality of interaction data items associated with the interaction and a security identifier uniquely identifying the interaction. The gateway comprises: an input configured to receive, from an intermediary server system in communication with the mobile device, altered interaction data, wherein one of the plurality of interaction data items generated by the mobile device has been replaced with the dynamic reference data; a processor configured with instructions that when executed cause the processor to assess the received altered interaction data in order to verify the interaction; and an output configured to transmit, to a remote authentication server, the received altered interaction data.

According to a further aspect of the present disclosure, there is provided a computer-implemented method, carried out by an intermediary server system, of providing data for use in authenticating an interaction carried out between a mobile device and a gateway. The method comprises receiving, from the mobile device, interaction data comprising a plurality of interaction data items associated with the interaction and a security identifier uniquely identifying the interaction; and transmitting a request, to a remote authentication server, for reference data to be associated with the security identifier, the request comprising at least one of the plurality of interaction data items and the security identifier. The method further comprises receiving, from the remote authentication server, dynamic reference data associated with the security identifier; altering the received interaction data by replacing at least one of the plurality of interaction data items with the dynamic reference data; and transmitting, to the gateway, the altered interaction data.

As mentioned previously, the above-described method advantageously exploits existing data processing and transmission pathways that are currently in place, as it can be implemented using the existing supporting network infrastructure for such interactions. This increases the ease with which the use of dynamic data may be implemented, and avoids any delays in uptake of the method which might arise due to a need to change or upgrade the associated physical network infrastructure and connections.

The above-described method is particularly useful in situations where the remote authentication system is not directly associated with either the mobile device or the gateway, and particularly for cases where the remote authentication system is required to authenticate interactions that are carried out between multiple different mobile device-gateway pairs. For example, in the case where the interactions correspond to transactions that are carried out between cardholders and merchant online gateways, as the payment card used in the transaction is not physically present during the transactions, this makes verification of the transactions much more difficult for the remote authentication system.

According to another aspect of the present disclosure, there is provided a computer-implemented method of generating data for authentication of an interaction carried out between a mobile device and a gateway, the method being carried out by an authentication system (or server) remote from the mobile device and the gateway. The method comprises receiving a request for dynamic reference data, the request comprising a plurality of interaction data items associated with the interaction, and a security identifier uniquely identifying the interaction; and generating, in response to the request, dynamic reference data associated with the security identifier. The method further comprises storing, in a storage location, the generated dynamic reference data together with the received security identifier; and transmitting the dynamic reference data to an intermediary server system in communication with the mobile device and the gateway.

According to another aspect of the present disclosure, there is provided a computer-implemented method of authenticating an interaction carried out between a mobile device and a gateway, the method being carried out by an authentication system remote from the mobile device and the gateway. The method comprises receiving altered interaction data from the gateway, the altered interaction data comprising a plurality of interaction data items associated with the interaction, and dynamic reference data associated with a security identifier uniquely identifying the interaction; retrieving, from a storage location, the security identifier corresponding to the received dynamic reference data; and verifying the validity of the security identifier.

This method ensures that the security identifier may be used in association with the interaction data to securely authenticate the transaction, whilst also maintaining the ease and simplicity of the transmission of the interaction data, as the security identifier itself need not be transmitted as part of the interaction data during the interaction. This allows the interactions to be carried out using existing network infrastructure. The method may further comprise inserting the retrieved security identifier into the interaction data for subsequent authentication of the interaction.

In some embodiments, the verifying step comprises determining whether a maximum storage validity period of the security identifier has been exceeded. As mentioned previously, by associating a maximum storage validity period with the security identifier, the method advantageously ensures that the security identifier only remains valid for a short period of time - this period of time is sufficiently long so as to enable the interaction data to be received and authenticated by the server, but sufficiently short so as to prevent a third party from intercepting the transmissions and utilising the security identifier at a later date to authenticate additional fraudulent interactions.

In some embodiments, the retrieving step comprises retrieving one or more stored data items associated with the interaction, and the verifying step comprises comparing at least one of the received plurality of interaction data items with a corresponding one of the stored data items.

As mentioned previously, the interaction data items may be stored in a database by the authentication system, together with the security identifier and the reference dynamic data, such that the combination of data items may be used to authenticate the interaction at a subsequent date - a match between stored and received data involving multiple variables will have a much lower likelihood of producing a false positive result than a match involving only a single variable.

In some embodiments, the received altered interaction data further comprises dynamic validation data, the retrieving step comprises retrieving one or more stored data items associated with the interaction, and the verifying step comprises comparing the dynamic validation data with a corresponding one of the stored data items.

According to another aspect of the present disclosure, there is provided a computer program product comprising instructions which, when the program is executed by a computer, cause the computer to carry out the steps of the above-described methods.

According to another aspect of the present disclosure, there is provided a computer-readable storage medium comprising instructions which, when executed by a computer, cause the computer to carry out the steps of the above-described methods.

It will be appreciated that similar benefits and advantages will be associated with the servers, systems and other components carrying out the corresponding methods, as are associated with the methods themselves. In addition, it will also be appreciated that any features associated with the herein-described methods would also be equally applicable in respect of the systems, servers and other components that are arranged to out those methods, and vice versa.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
**Figure 1** shows an exemplary transaction system in which embodiments of the present disclosure may be used;
**Figure 2** shows a schematic block diagram illustrating further details of the user's mobile device, the merchant entity's online payment gateway, and the card issuing system according to the embodiment of Figure 1;
**Figure 3** is a flow chart illustrating the process of carrying out an e-commerce transaction, according to an embodiment of the present disclosure, in particular the generation and transmission of data that is to be used in subsequent transaction authentication;
**Figure 4** is a flow chart illustrating the processes carried out by the card issuing system in order to authenticate the transaction according to an embodiment of the present disclosure; and
**Figure 5** is a flow chart illustrating further details of the process of Figure 4 which will result in acceptance or rejection of the transaction.

Where the figures laid out herein illustrate embodiments of the present disclosure, these should not be construed as limiting to the scope of the disclosure. Where appropriate, like reference numerals will be used in different figures to relate to the same structural features of the illustrated embodiments.

### DETAILED DESCRIPTION

The present disclosure relates to a system and method for authenticating interactions that are carried out between a mobile device and a gateway. These interactions involve the exchange of electronic data packets between the mobile device and the gateway via a communications network (and facilitated by an intermediary system/server), and the subsequent authentication of these interactions by a remote authentication server entity involves the use of dynamic (e.g. cryptographic) data.

Specifically, dynamic cryptographic data is generated during the interaction, and therefore uniquely identifies that interaction; dynamic reference information associated with this cryptographic data is then incorporated into the electronic data packets that are exchanged between the gateway and the remote authentication server entity as a matter of course during their interactions. This dynamic reference information is used for retrieving and identifying the corresponding cryptographic data that is to be validated during the interaction authentication process.

Although the majority of this specification focuses on an implementation in the context of authenticating payment transactions (and particularly in the context of authenticating ecommerce, online payment transactions), it should be understood that possible applications of such a system and method cover various other implementation scenarios, and may be used in a wide range of technologies and fields. As long as electronic data is exchanged between networked entities during an interaction, and dynamic data may be incorporated into the exchanged data for use during subsequent authentication, the system and method described herein will be of benefit. For example, the authentication system may be applied for access control - i.e. authenticating users attempting to access a secure location.

Specific embodiments are described below with reference to the figures.

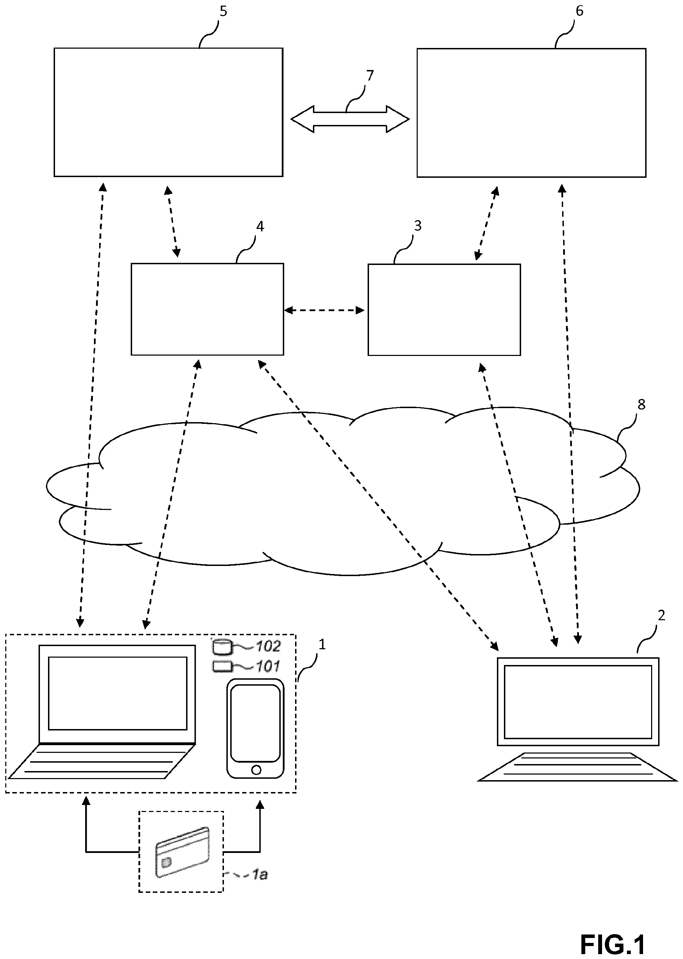

**Figure 1** shows an exemplary transaction system in which embodiments of the disclosure may be used.

A user (not shown) is provided with a payment device - this may be for example a mobile (computing) device 1, such as a mobile phone or a laptop, acting as a proxy for a payment card 1a. The mobile device has at least one processor 101 and at least one memory 102 together providing at least one execution environment, as described further below. These devices have firmware and applications (for example, a digital wallet application service) run in at least one Rich execution environment (REE) with an operating system such as iOS, Android or Windows. Payment devices will typically be equipped with means to communicate with other elements of a payment infrastructure. These communication means may comprise an antenna and associated hardware and software for data communications via a mobile network or local wireless networking using 802.11 protocols or any combination of the above. The communication means may also incorporate hardware and software to support NFC communications for contactless interactions if so desired.

The focus of the present disclosure relates particularly to (online) e-commerce payment transactions between a cardholder and a merchant, which generally involve the user's mobile device 1 and a payment interface of the merchant 2 (for example, the merchant's website that may be accessed by the user using their mobile device 1). Such transactions are usually initiated via a merchant's website and, upon selection of a digital payment mechanism (such as a digital wallet) by the user at the website, a prompt is provided to the user to authenticate the transaction using their mobile device 1. The payment data generated as part of the transaction is subsequently passed to the merchant 2, or to a payment gateway 3 associated with the merchant. Communications between the user's mobile device 1 and the merchant 2 or their payment gateway 3 are facilitated by an intermediary entity in the form of a remote transaction system/server 4. This entity 4 may, for example, take the form of a switch that is associated with a card issuing bank or system 5, and is provided as part of a transaction infrastructure by a payment card provider, or may instead take the form of a server that is associated with the digital wallet - it may comprise a single computing system or a plurality of computing systems communicating over a network. For ease of reference, this entity will be referred to subsequently in this document as a 'switch' 4, but this term should also be understood to encompass a digital wallet server or any of the other solutions indicated above, unless explicitly stated otherwise. Data is provided by the mobile device 1 to the switch 4, which forwards this data to the merchant 2 (who will then communicate with their payment gateway 3), or directly to their payment gateway 3.

Mechanisms are also shown which allows secure communication between the user and their card issuing bank or system 5, and between the switch 4 and the card issuing system 5 (particularly in cases where the switch 4 is associated with card issuing system 5). There are also shown in Figure 1 mechanisms which allow communication between the merchant 2 and payment gateway 3, and an acquiring bank or other system 6 in a secure way. A banking communications infrastructure 7 will also connect the card issuing system 5 and the acquiring system 6, allowing transactions to be carried out between them. In addition, a communications network 8, which may take the form of the public internet, is also provided.

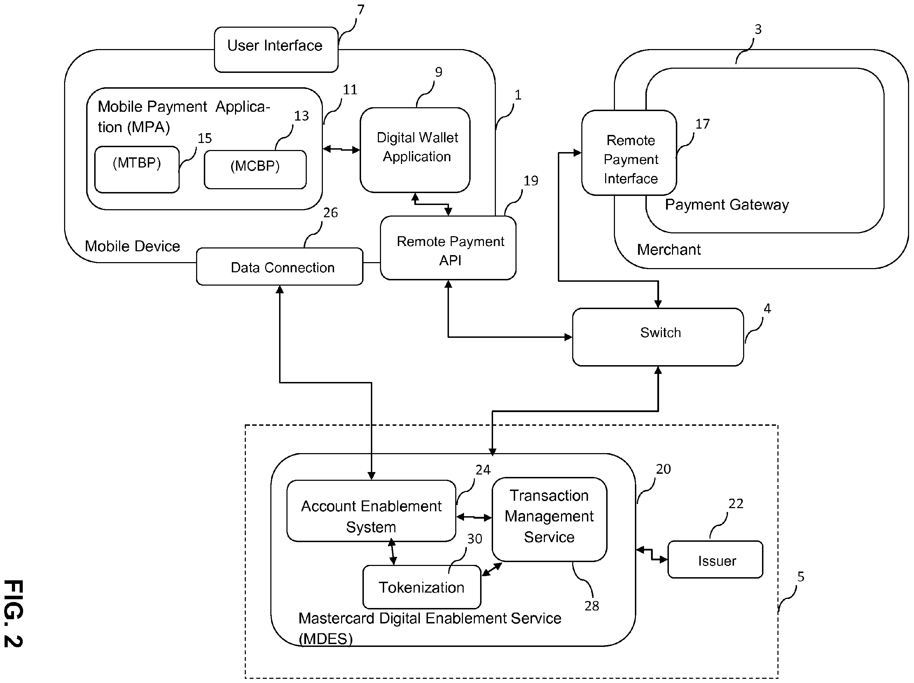

**Figure 2** shows in more detail functional elements of the system of Figure 1 which are suitable for implementing embodiments of the present disclosure, namely the user's mobile device 1, the merchant payment gateway 3, the switch 4 and the card issuing system 5.

The mobile device 1 comprises a user interface 7 suitable for user interaction during the transaction process, a digital wallet application 9, and a Mobile Payment Application (MPA) 11 which are both implemented in the main operating system of the mobile device 1. The digital wallet application 9 stores user details and information relating to frequently-used payment cards, and is in operative communication with the MPA 11; the MPA 11 provides the mobile payment functionality and is actively involved in the data processing associated with such payment transactions. The MPA 11 may comprise multiple sub-modules which each carry out different tasks during the transaction interactions; however it will be appreciated that certain transactions may only require the use of some of these sub-modules and the functionality they provide. For example, a Secure Element (SE) module (not shown) may manage the digitised cards, particularly in cases where an additional secure chip comprising an isolated operating environment is provided within the mobile device, and is programmed with the necessary business logic to guide the steps of the transaction process, and handle payment card data and cryptographic keys. In other examples, a Mastercard Cloud Based Payment (MCBP) module 13 manages the details of e-commerce online transactions, particularly in cases where data required for carrying out the transaction is retrieved from the Cloud.

The mobile device 1 may also comprise a secure portion or environment (not shown) which stores keys that are used during the transaction processing stage to encrypt portions of the transaction data before they are forwarded to the merchant. The exact type of secure environment utilised depends on the capabilities (e.g. operating system and specifications) of the mobile device, as well as the preferences of the card issuer. For example, as previously mentioned a Secure Element (i.e. a secure storage and execution environment) may be utilised to hold the payment application and cryptographic keys; alternatively a Trusted Execution Environment (TEE) may be used, which is logically isolated from the REE of the mobile device 1, communicating with the REE only via secure channels, and also contains one or more trusted applications adapted to run in this environment. If a TEE is used, then the MPA 11 will also comprise a Mastercard TEE Based Payment (MTBP) module 15 which manages the details of transactions carried out using the TEE.

In order to carry out an online payment transaction, the digital wallet application 9 needs to be able to provide payment data to the merchant's online payment gateway 3. In the system of Figure 2, this is facilitated by the switch 4 which may communicate directly with the online payment gateway 3, for example via a remote payment interface 17, or indirectly via communication between the switch 4 and the merchant 2 (whereupon the merchant 2 will then communicate with its online payment gateway 3). Instructions and transaction data are provided to the switch 4 from the mobile device 1 via a remote payment API 19 in the mobile device 1.

The card issuing system 5 comprises a Mastercard Digital Enablement Service (MDES) 20 which is a digitization and tokenization platform that is used by the card issuing entity 22 to digitize the payment card 1a into the user's digital wallet 9 and/or mobile payment application 11. It will be appreciated, however, that digitisation of the payment card may alternatively be performed by the issuing entity 22 directly, or via a separate service provider. The MDES 20 comprises multiple modules that provide various services throughout the transaction process. For example, the Account Enablement System (AES) 24 provides services such as checking card and device eligibility, and performing authentication of the cardholder and/or transaction. Where necessary, the AES 24 also carries out provisioning of account credentials, cryptographic keys and associated data to the MPA 11 and the mobile device 1 via a secure data connection 26; this data connection 26 may also be used by the MDES to exchange information with the MPA 11 (and hence also the digital wallet application 9) during the transaction process. The Transaction Management System 28 processes transactions and verifies the received transaction data to authenticate the card credentials. The MDES 20 further comprises a tokenization module 30 which contains data and instructions for carrying out tokenization of secure transaction information. Communication mechanisms between the switch 4 and the MDES 20 are also provided, to enable the exchange of transaction-related data and instructions.

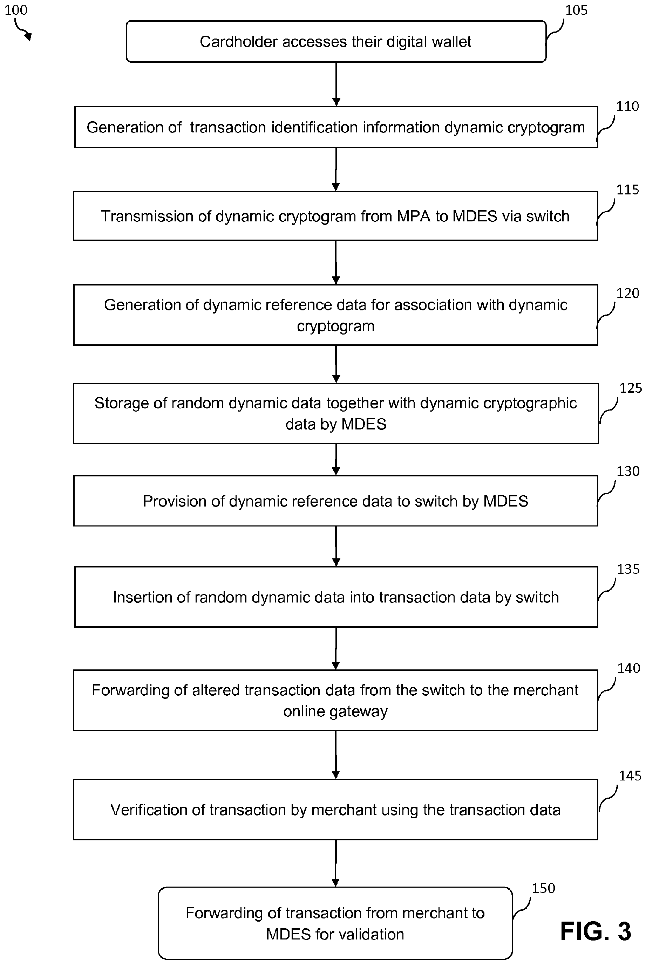

**Figure 3** illustrates the process flow 100 of an e-commerce transaction according to an embodiment of the present disclosure.

Before providing a description of this transaction process flow, it is important to first introduce the concept of a 'dynamic cryptogram'. It will be appreciated that in this context, a 'static' cryptogram is one which is generated based on the same, unchanging pieces of data; by contrast, a 'dynamic' cryptogram is generated based on data that changes over time, and preferably at least some of the data changes every time a new dynamic cryptogram is generated (i.e. with each transaction that is carried out).

Such dynamic cryptograms increase the security of online transactions and allow a card issuing system to quickly and easily validate and authenticate transactions. In greater detail, dynamically-generated cryptographic data effectively 'signs' the transaction data for EMV transactions and is only generated when cardholder verification has been performed (for example, based on the entry of a user's PIN). The subsequent validation of this dynamic cryptographic data generally indicates that the user has entered the correct PIN, or that a correctly provisioned MPA 11 containing appropriate cryptogram-generating keys was used.

It is noted that dynamic cryptograms are also used to authenticate other types of payment transactions. For example, the processing of contactless transactions carried out by mobile devices also involves the generation of a dynamic cryptogram, as does the processing of dynamic magnetic strip transactions. For the purposes of the present application which focuses on ecommerce transactions, the dynamically-generated cryptogram is called a dynamic "Transaction Cryptogram" and is conveyed in the Universal Cardholder Authentication Field (UCAF) of the transaction data from the mobile device at which it is generated.

In this context, a dynamic transaction cryptogram is usually generated by the mobile device 1 (and specifically by the MPA 11, in conjunction with the digital wallet application 9) using a cryptographic key based on the following three main pieces of data: an Application Transaction Counter (ATC), an Unpredictable Number (UN) and an Initial Vector (IV). The ATC corresponds to a sequential counter that is incremented each time the MPA 11 is executed to carry out a transaction, and is therefore unique to that particular transaction. The UN is generated by the MPA 11 based on the ATC and the transaction time (i.e. the time window during which the transaction was initiated). It is usually important to utilise the transaction time window during UN generation, as merchants may retain transaction authorisation data for long periods of time, and may forward multiple transactions in a single batch to the card issuing system 5 for validation. For example, a merchant may wait until the end of the business day before sending all of their transactions to the relevant card issuers. The IV is effectively a 'seed' value for generating the dynamic transaction cryptogram, and can signify certain characteristics of the transaction. In particular, the IV may be used to indicate whether the transaction in question involved cardholder authentication (for example, low-value contactless transactions do not require authentication by the cardholder).

Ideally, the dynamic transaction cryptogram generated would be transmitted by the merchant for verification in association with the transaction data to which it pertains. However, one of the challenges associated with the use of dynamic cryptographic data for transaction authentication is that the majority (if not all) of merchant systems have not been updated, or are not necessarily easily updateable, to enable or facilitate the transmission of such dynamic cryptographic data. It is therefore often the case that the merchant systems, whilst desiring to enable the use of digital wallet payments, are unable to accept and transmit the associated dynamic cryptographic data that is required to maintain the security of such transactions.

The present applicant has therefore devised a method of enabling their proprietary digital wallet applications 9 to be used when carrying out transactions with merchants whose systems are not yet capable of supporting the transmission of the necessary cryptographic data, whilst also maintaining the necessary level of authentication that is required to ensure the security of the transactions in question. This method involves the leveraging of existing processing pathways and data transmission mechanisms to ensure that online transactions are effectively 'backwards-compatible' for all merchants. In particular, the present applicant has recognised that dynamic reference data associated with the dynamic cryptogram may be inserted into existing data fields (such as the tokenized PAN, expiry date and CVC2) present within standard transaction data packets that are generally capable of being transmitted by merchants. The dynamic reference data transmitted in this form to the card issuing system 5 may then be used to identify or determine the corresponding dynamic cryptogram associated with that transaction which will then be used in the subsequent transaction authentication and validation process. This obviates the need for the merchant to process or transmit any extra data in addition to that which would be transmitted in the normal course of events, or to alter their existing systems to accommodate the transmission of dynamic cryptographic data.

One of the challenges associated with inserting dynamic reference data into traditional transaction data is a restriction on the pieces of transaction data into which the dynamic data may be inserted. In particular, the merchant will still require access to the PAN, the CVC2 and the expiry date to approve and carry out the transaction in the first instance, and these pieces of data therefore must still be capable of passing the merchant's data validation processes. These data cannot therefore be altered beyond recognition when incorporating the dynamic reference data into the transmitted payment data packet.

The present applicant has, however, appreciated that use of the expiry date information by the merchant is generally limited to a cursory check to ascertain that the card being used for the transaction has not expired. Therefore, as long as the expiry date value indicates that the card is still valid and in date, even if the information does not necessarily match the value on the card itself, the transaction is unlikely to be rejected by the merchant.

The present applicant has therefore realised that the expiry date information is particularly suitable for alteration to serve as a vehicle for dynamic reference data, although there will be a limit on the amount of information that may be contained within the expiry date. Specifically, it is noted that any newly-generated alternative 'expiry date' value would generally lie within a range of numbers between 1 and 60 months from the current date (i.e. 60 possible values available) because the time window for potential expiry dates is usually expected to be around five years (as payment cards are usually replaced within that time window in most countries), and the smallest increment in expiry date values is a calendar month. It would however be possible to extend the range by a few tens of values in certain jurisdictions, depending on the restrictions on expiry date values (for example, in some cases it may be possible to utilise a time window of 7 years instead, which would give a total of 84 possible 'expiry date' values).

The process flow 100 carried out between the mobile device 1, the e-commerce merchant gateway 3, the switch 4 and the card issuing system 5 in order to carry out a transaction will now be described with reference to **Figure 3****.**

The process is initiated in step 105 by the cardholder accessing (i.e. signing into) their digital wallet application 9 during an online transaction in order to retrieve identification and payment card details for provision to the merchant online payment gateway 3. In response to this transaction initiation, the MPA 11 (along with other secure applications where necessary) generates in step 110 an ATC and a UN for the transaction. Dynamic transaction data - and specifically a dynamic cryptogram - is subsequently created, using a cryptographic key, based on the ATC, UN (if utilised) and IV (if utilised). For example, a cryptographic session key may be obtained from the MCBP 13; alternatively a cryptographic master key stored in the TEE may be utilised.

However, instead of being transmitted immediately to the merchant's online payment gateway 3, the dynamic cryptographic data generated in this manner is swapped for or replaced with a piece of random dynamic data that is associated with the dynamic cryptogram in question and inserted into the transaction data. Specifically, the dynamic cryptogram generated for the transaction by the MPA 11 is transmitted to the MDES 20 in step 115 via the switch 4. A random dynamic four-digit number (representing a purported expiry date' value of the transaction card, and therefore hereafter also referred to as rYYMM for referencing convenience) is generated in response at step 120. The MDES 20 stores in step 125 the generated random dynamic reference data rYYMM (in a database) in association with the received dynamic cryptogram, and subsequently transmits the random dynamic data back to the switch 4 in step 130. Due to its association with the unique transaction cryptogram, the random dynamic data may subsequently be used by the MDES to identify the correct transaction cryptogram which is to be retrieved and validated for the transaction in question. It should be noted at this point that the randomly-generated dynamic data rYYMM used cannot correspond to the *real* expiry date value of the transaction card, because the real expiry date value may be easily obtained via other mechanisms (for example, via a contactless interface in the case of an NFC-enabled digital wallet). The fact that the rYYMM is not the real expiry date value therefore provides an additional security measure.

The random dynamic data is then inserted into the 'expiry date' field of the transaction data in step 135, and this altered transaction data is then provided to the switch 4, which forwards the data to the merchant online gateway 3 in step 140 (for example, via the remote payment interface 17). The merchant uses at least some of the received transaction data to approve and authenticate the transaction in step 145, and if the transaction is deemed to be acceptable, the merchant carries out the transaction and communicates the successful transaction result back to the cardholder via their mobile device 1. The merchant also forwards the received transaction data to the card issuing system 5 (and specifically the MDES 20) in step 150 for subsequent validation. This data may be forwarded to the MDES 20 via the acquirer 6.

As was previously mentioned, all merchants should in principle be capable of accepting the expiry date information from the digital wallet application 9, and of thereafter transmitting this expiry date information as part of standard transaction data transmissions. By replacing the real expiry date with the random dynamic data rYYMM, the present method may therefore be implemented for any merchant (i.e. full backwards compatibility is achieved).

In addition, some merchants have adapted or updated their systems such that they are also capable of accepting the CVC2 data element from the digital wallet application 9, and forwarding this onwards as part of the transaction data packet to the MDES 20 for validation. In cases where a merchant has indicated that they are able to accept and transmit the CVC2 data from the digital wallet application 9, an additional random dynamic 'validation' data element may be generated by the MDES 20 for insertion (by the switch 4) into the transaction data field corresponding to the CVC2 data - the original CVC2 data would therefore be replaced by this additional dynamic validation data, which is referred to as a Token Validation Code (TVC). The TVC can be used as an additional cross-check mechanism by the MDES to ascertain that the transaction cryptogram that was retrieved is correct, and that all of the transaction properties stored by the MDES 20 match the incoming transaction data received from the gateway 3. However, it will be appreciated that because not all merchants are capable of accepting the CVC2 data element from the digital wallet application 9, the subsequent identification and retrieval of the transaction cryptogram that is carried out by the MDES 20 cannot be reliant on the dynamic TVC validation data, since the TVC will not be generated and transmitted by the merchant in every instance. Instead, often the real CVC2 data element is transmitted unaltered by the merchant to the MDES.

It will be appreciated that as the random dynamic data rYYMM is used as a reference for subsequent retrieval of the transaction cryptogram, the communication from the switch 4 forwarding the dynamic cryptogram to the MDES 20 and requesting the replacement dynamic reference data from the MDES 20 may also be referred to as a transaction cryptogram 'reference data request'. In order to generate the appropriate dynamic data in response, and to ensure that sufficient data is stored to enable subsequent retrieval and authentication of the appropriate transaction cryptogram, this reference data request must include at least the following information: a transaction token identifying the transaction (e.g. the PAN of the payment card); a token expiry date (e.g. the expiry date of the associated payment card) for exchange with the generated dynamic reference data rYYMM; the generated dynamic cryptogram; and an indication as to whether the merchant is capable of and supports the acceptance of the CVC2 data element from the digital wallet (which will indicate whether a TVC should be generated by the MDES 20).

For additional security, in some embodiments, when the transaction cryptogram is received and stored by the MDES 20, it is configured to be valid for a limited time period only (for example, on the order of several minutes, although this value may be extendible depending on various factors such as the wallet-merchant interface). In such embodiments, if a transaction authorization message (requiring use of a transaction cryptogram for validation) is transmitted by the merchant 3 to the MDES 20 after that time period has expired, the transaction will be declined by the MDES 20 as the transaction cryptogram is determined to have expired. In such embodiments, the reference data request should also indicate a desired 'maximum storage validity period' for the transaction cryptogram (for example, if the merchant wishes to delay transaction authorization without adversely affecting the transaction verification process). If no validity time period is specified in the reference data request, a default value will be used.

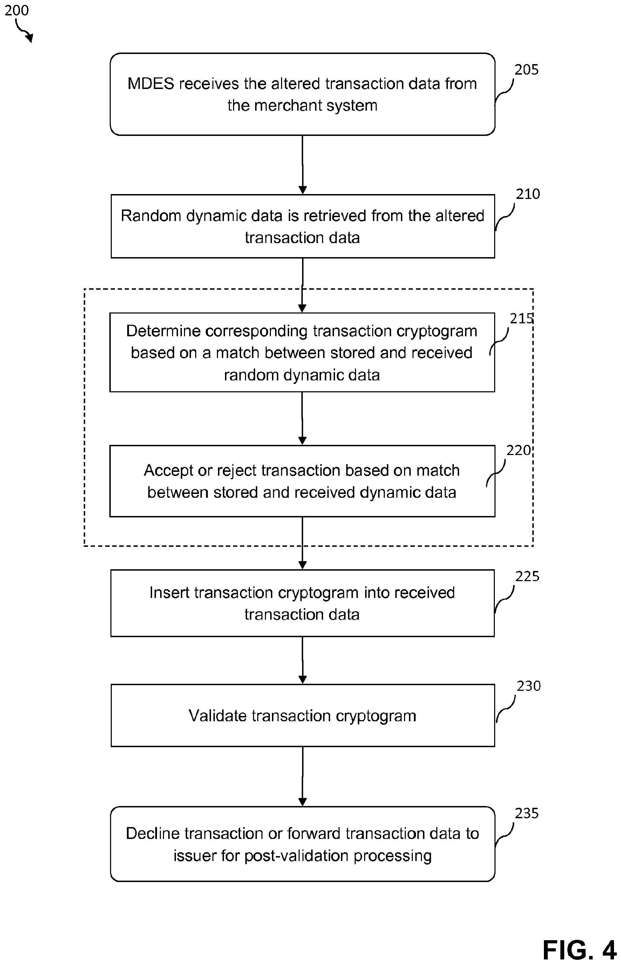

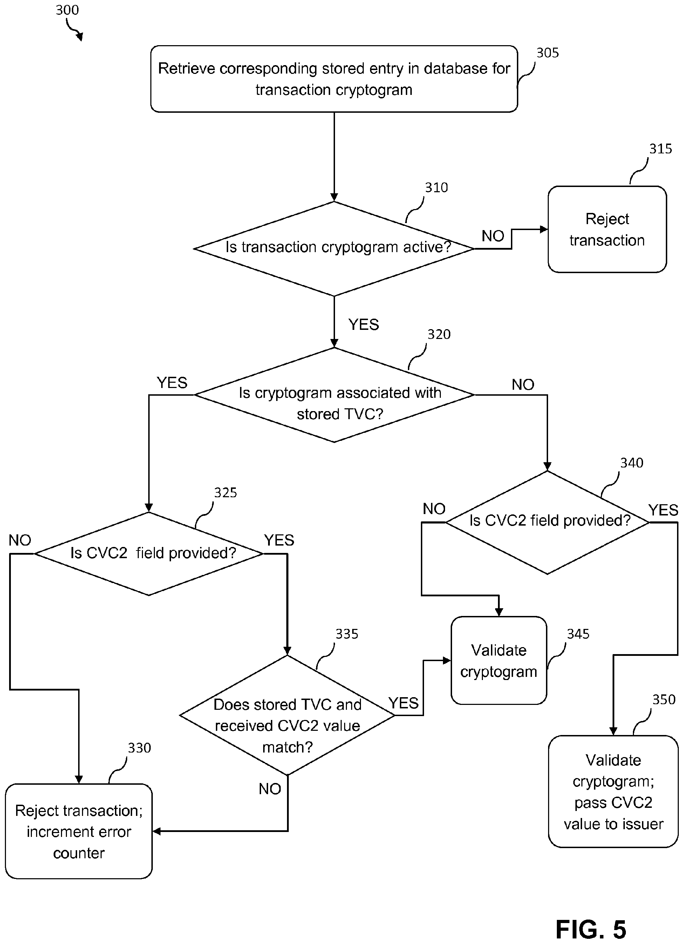

The validation process carried out by the card issuing system 5 will now be described with reference to **Figures 4** **and** **5**, in which Figure 4 shows an overview of the authentication and validation process 200 carried out by the MDES, while Figure 5 illustrates the details of the process 300 by which the MDES utilises the received dynamic data value(s) in its cryptogram processing steps. The steps of process 300 take place in the portion of process 200 that is indicated by the dotted-line box.

To begin with, in step 205 when the transaction data is received from the merchant (or the acquirer), the MDES 20 reads or extracts the dynamic reference data rYYMM from the expiry date field in the transaction data at step 210, and uses the data to 'look-up' and retrieve in step 215 the corresponding entry in the database which contains the associated stored transaction cryptogram. This entry will contain other stored pieces of transaction data, as well as the dynamic validation TVC value that was generated, if applicable. The retrieved transaction cryptogram and the associated stored data are thereafter used to determine in step 220 whether the transaction should be accepted or rejected, and therefore whether a subsequent cryptogram validation step is required. If no valid stored transaction cryptogram is found that corresponds to the received rYYMM data, the transaction is automatically rejected, as a transaction cryptogram is required for authentication. Any additional stored data associated with the transaction cryptogram may also be compared with corresponding additional dynamic data elements in other transaction data fields (for example, the CVC2 data element which is expected to contain the dynamic validation data TVC is compared with the stored TVC value, if one exists).

If a valid transaction cryptogram is retrieved, and successful matches are found for any additional dynamic data elements, the MDES 20 therefore determines that the stored transaction cryptogram is indeed the correct one associated with the transaction in question and the transaction is approved. The retrieved transaction cryptogram is then inserted into an appropriate (empty) field in the transaction data in step 225. Validation of the transaction cryptogram is then subsequently carried out by the MDES 20 in step 230 (for example, by a specific mapping and cryptographic sub-module within the MDES 20) according to standard cryptogram validation processing and rules.

Step 235 is then carried out in which if validation of the cryptogram is successful, the transaction is accepted and the transaction data is forwarded to the issuer for post-validation processing. If validation of the cryptogram is unsuccessful, the transaction is declined and the merchant, as well as other entities in the network, are informed.

Now considering the retrieval of the transaction cryptogram in greater detail (with reference to Figure 5), after the dynamic reference data rYYMM has been extracted or read from the altered transaction data, the stored entry from the database is retrieved in step 305 based on the dynamic reference rYYMM dynamic data. This stored entry comprises the information that was provided to the MDES 20 by the switch 4 in the initial 'reference data request' - namely, the transaction cryptogram, the received token value associated with the transaction, the desired maximum storage validity period of the transaction cryptogram, as well as an indication as to whether the merchant is able to transmit the CVC2 data element from the digital wallet application 9. The stored entry also comprises the dynamic validation TVC data that was generated by the MDES 20 (if applicable).

Once the appropriate entry is retrieved from the database, the MDES 20 first ascertains in step 310 whether the transaction cryptogram is active - in other words, whether the maximum storage validity period for the transaction cryptogram has been exceeded. If this validity period has been exceeded, the transaction cryptogram is determined to be inactive and no longer valid, and the MDES will reject the transaction in step 315. If the transaction cryptogram is determined to be active, the next step 320 is taken which will be to ascertain whether a dynamic TVC value was generated and stored in association with the transaction cryptogram.

If a stored TVC value is retrieved from the database, the MDES 20 will then check in step 325 if CVC2 data is provided in the transaction data. If no CVC2 data is found in the transaction data, the MDES 20 will reject the transaction in step 330; similarly, if CVC2 data is found within the transaction data but it does not match the stored TVC data, the MDES 20 will also reject the transaction. These transaction rejections are carried out because a TVC value should only have been generated originally (and stored by the MDES 20) if the merchant online payment gateway 3 indicated it was capable of supporting the provision of the CVC2 data element from the digital wallet application 9, and therefore the transaction data is expected to contain a CVC2 data field that has been replaced by the switch 4 with the dynamic TVC value. In addition to rejecting the transaction if either of these two errors occurs, the MDES 20 will also increment a counter value of TVC/CVC2 errors; a limit is set for the maximum counter value, and once this value is reached by the current transaction, the transaction will be rejected (as this indicates that multiple previous attempts to retrieve the necessary transaction cryptogram have failed, and therefore further attempts will likely also be unsuccessful and need not be attempted).

If a stored TVC value is not retrieved, the MDES 20 will proceed to the step 345 of validating the cryptogram. However, even if no stored TVC value is found to be associated with the transaction cryptogram, the MDES 20 will still carry out a check in step 340 as to whether the CVC2 data element has been provided in the transaction data, as the output content to the issuer 22 for post-validation processing will differ depending on the result of this check. In other words, the MDES 20 will carry out cryptogram validation in either case (as a valid transaction cryptogram has been retrieved using the reference dynamic data), however if the CVC2 data element is provided in the transaction data, it will also be forwarded to the issuer 22 after cryptogram validation by the MDES 20.

The present disclosure therefore provides a system and method which exploits the existing mechanisms and network infrastructure, currently in place for merchants and card issuers to authenticate payment card transactions, whilst also providing an effective and secure means to effect remote payment transactions.

Many modifications may be made to the above examples without departing from the scope of the present disclosure as defined in the accompanying claims.

For example, it will be appreciated by the skilled person that elements of transaction data other than the expiry date may be exchanged for dynamic reference data that is subsequently used to identify the corresponding transaction cryptogram validation. For example, the CVC2 element could be exchanged for randomly-generated dynamic data that can be used as a pointer for subsequent cryptogram retrieval and validation. However, it is noted that exchanging the CVC2 data field for the reference dynamic data would generally only be useful in cases where the merchant is able to forward the CVC2 data received from the digital application to the MDES; currently, not all merchant systems have this capability. In such cases, greater entropy would be achievable than if using the expiry date, as up to around 1000 values would be available if utilising the CVC2 element compared with around 60 values available if utilising the expiry date value. Alternatively, it would be possible to utilise the digits of the token (the PAN) to convey the reference dynamic data. For example, the first 11 digits of the token would remain unchanged, with the reference dynamic data being incorporated into the subsequent 4 digits, followed by a Luhn check digit for validation purposes. This would result in a random token being generated for each transaction. Regardless of the method via which the reference dynamic data is transmitted, the subsequent cryptogram validation steps taken by the MDES 20 would still be the same.

## Claims

1. An intermediary server system for providing data for use in authenticating an interaction between the mobile device and a gateway, the server system comprising:
an input configured to receive, from the mobile device, interaction data comprising a plurality of interaction data items associated with the interaction and a security identifier uniquely identifying the interaction;
a processor configured with instructions that when executed cause the processor to:
generate a request for reference data to be associated with the security identifier, the request comprising at least one of the plurality of interaction data items and the security identifier;
transmit, to a remote authentication server, the generated request;
receive, from the remote authentication server, the dynamic reference data; and
alter the received interaction data by replacing at least one of the plurality of interaction data items with the dynamic reference data; and
an output configured to transmit, to the gateway, the altered interaction data.

2. The intermediary server system of claim 1, wherein the processor is configured to transmit to the remote authentication server, an indication that dynamic validation data should be provided by the remote authentication server, and to receive the dynamic validation data from the remote authentication server.

3. The intermediary server system of claim 2, wherein the processor is configured to alter the received interaction data by replacing at least one of the plurality of interaction data items with the dynamic validation data.

4. The intermediary server system of any preceding claim, wherein the dynamic reference data is randomly-generated.

5. The intermediary server system of any preceding claim, wherein the interaction comprises an online payment transaction and the gateway corresponds to an online payment gateway associated with a merchant.

6. The intermediary server system of claim 5, wherein the at least one of the plurality of interaction data items replaced with the dynamic reference data corresponds to an expiry date of a payment card used in the online payment transaction.

7. A server for generating data for authentication of an interaction carried out between a mobile device and a gateway, the server comprising a processor configured with instructions that when executed cause the processor to:
receive, from an intermediary server system associated with the mobile device and gateway, a request for dynamic reference data, the request comprising a plurality of interaction data items associated with the interaction, and a security identifier uniquely identifying the interaction;
generate, in response to the request, dynamic reference data associated with the security identifier;
store, at a storage location, the generated dynamic reference data together with the received security identifier; and
transmit, to the intermediary server system, the dynamic reference data.

8. The server of claim 7, wherein the processor is configured to associate a maximum storage validity period with the security identifier.

9. An authentication server for authenticating an interaction carried out between a mobile device and a gateway, the authentication server comprising a processor configured with instructions that when executed cause the processor to:
receive, from the gateway, altered interaction data comprising a plurality of interaction data items associated with the interaction, and dynamic reference data associated with a security identifier uniquely identifying the interaction;
retrieve, from a storage location, the security identifier corresponding to the received dynamic reference data; and
verify the validity of the security identifier.

10. The authentication server of claim 9, wherein the processor is further configured to determine whether a maximum storage validity period of the security identifier has been exceeded when verifying the validity of the security identifier.

11. The method of claim 9 or claim 10, wherein the received altered interaction data further comprises dynamic validation data, and wherein the processor is further configured to retrieve one or more stored data items associated with the interaction, and compare the dynamic validation data with a corresponding one of the stored data items.

12. A gateway arranged to process an interaction carried out with a mobile device, the mobile device configured to generate interaction data comprising a plurality of interaction data items associated with the interaction and a security identifier uniquely identifying the interaction, the gateway comprising:
an input configured to receive, from an intermediary server system in communication with the mobile device, altered interaction data, wherein one of the plurality of interaction data items generated by the mobile device has been replaced with the dynamic reference data;
a processor configured with instructions that when executed cause the processor to assess the received altered interaction data in order to verify the interaction; and
an output configured to transmit, to a remote authentication server, the received altered interaction data.

13. A computer-implemented method of providing data for use in authenticating an interaction carried out between a mobile device and a gateway, the method being carried out by an intermediary server system and comprising the steps of:
receiving, from the mobile device, interaction data comprising a plurality of interaction data items associated with the interaction and a security identifier uniquely identifying the interaction;
transmitting a request, to a remote authentication server, for reference data to be associated with the security identifier, the request comprising at least one of the plurality of interaction data items and the security identifier;
receiving, from the remote authentication server, dynamic reference data associated with the security identifier;
altering the received interaction data by replacing at least one of the plurality of interaction data items with the dynamic reference data; and
transmitting, to the gateway, the altered interaction data.

14. A computer-implemented method of generating data for authentication of an interaction carried out between a mobile device and a gateway, the method being carried out by an authentication system remote from the mobile device and the gateway and comprising the steps of:
receiving a request for dynamic reference data, the request comprising a plurality of interaction data items associated with the interaction, and a security identifier uniquely identifying the interaction;
generating, in response to the request, dynamic reference data associated with the security identifier;
storing, in a storage location, the generated dynamic reference data together with the received security identifier; and
transmitting the dynamic reference data to an intermediary server system in communication with the mobile device and the gateway.

15. A computer-implemented method of authenticating an interaction carried out between a mobile device and a gateway, the method being carried out by an authentication system remote from the mobile device and the gateway, the method comprising the steps of:
receiving altered interaction data from the gateway, the altered interaction data comprising a plurality of interaction data items associated with the interaction, and dynamic reference data associated with a security identifier uniquely identifying the interaction;
retrieving, from a storage location, the security identifier corresponding to the received dynamic reference data; and
verifying the validity of the security identifier.
